# EUROPEAN PATENT APPLICATION

(11) **EP 4 491 401 A1**
(43) Date of publication of application: **15.01.2025**
(21) Application number: 23766500.5
(22) Date of filing: 17.02.2023
(51) Int. Cl.: B41J 2/01, B41J 2/165, B41J 29/393

(54) **DATA PROCESSING DEVICE, DATA PROCESSING METHOD, PROGRAM, INSPECTION DEVICE, AND PRINTING SYSTEM**

(30) Priority: 07.03.2022 JP 2022034124
(71) Applicant: FUJIFILM Corporation, Tokyo 106-8620 (JP)
(72) Inventor: SEKI, Masaki, Ashigarakami-gun, Kanagawa 258-8577 (JP)
(74) Representative: Klunker IP Patentanwälte PartG mbB
(86) International application number: PCT/JP2023/005723
(87) International publication number: WO 2023/171321

(57) **Abstract**

A data processing apparatus, a data processing method, a program, a test apparatus, and a printing system that may suppress a decrease in productivity caused by occurrence of an image defect are provided. A data processing apparatus acquires captured data of a printed image (160), specifies a defect position indicating a position of a defect in the printed image by analyzing the captured data (174), estimates one or more defective printing element candidates as candidates of a defective printing element (178), derives a probability that the defective printing element candidate actually causes occurrence of the defect (164), and provides notification of the probability that the defective printing element candidate actually causes the occurrence of the defect (168).

## Description

### BACKGROUND OF THE INVENTION

### 1. Field of the Invention

The present invention relates to a data processing apparatus, a data processing method, a program, a test apparatus, and a printing system.

### 2. Description of the Related Art

In an ink jet printing apparatus comprising an ink jet head, an image defect such as a streak may occur because of variation in jetting performance of the ink jet head such as a decrease in jetting performance of a nozzle. In a case where the jetting performance of the ink jet head varies, the jetting performance of the ink jet head can be recovered by performing maintenance such as wiping.

JP2013-208838A discloses an ink jet printing apparatus that detects a defect of a stain and a defect of a nozzle malfunction by comparing a density value in captured data of a printed image with a density value of reference printing data input into a printing unit.

In the apparatus according to JP2013-208838A, in a case where the nozzle malfunction has occurred, a head in which the defect has occurred is detected, a defective jetting part in the head in which the defect has occurred is specified, and notification of the head in which the defective jetting part is present is provided.

### SUMMARY OF THE INVENTION

However, the nozzle malfunction detected in the apparatus according to JP2013-208838A is a defect that occurs with a specific frequency. In a case where a frequency with which a defect occurs is relatively high, and maintenance of the head is performed each time the defect occurs, this may result in a decrease in productivity.

As a countermeasure that avoids maintenance of the nozzle, it is considered to specify a nozzle in which the nozzle malfunction has occurred and perform jetting correction of the specified nozzle. However, in the apparatus according to JP2013-208838A, it is difficult to specify the nozzle in which the nozzle malfunction has occurred.

While an issue in the inkjet printing apparatus has been illustrated here, the same issue as the above issue is also present in a printing apparatus of other than an ink jet method such as a printing apparatus comprising a printing element of an electrophotographic method.

The present invention has been conceived in view of such circumstances, and an object of the present invention is to provide a data processing apparatus, a data processing method, a program, a test apparatus, and a printing system that may suppress a decrease in productivity caused by occurrence of an image defect.

In order to achieve the object, the following aspects of the invention are provided.

A data processing apparatus according to the present disclosure is a data processing apparatus comprising one or more processors, and one or more memories in which a program executed by the one or more processors is stored, in which the one or more processors are configured to, by executing an instruction of the program, acquire captured data generated by capturing a printed image printed on a printing medium, specify a defect position indicating a position of a defect in the printed image by analyzing the captured data, estimate one or more defective printing element candidates as candidates of a defective printing element from a plurality of printing elements provided in a printing head, from the defect position in the printed image, derive a probability that the defective printing element candidate actually causes occurrence of the defect, and provide notification of defective printing element candidate information including the probability of actually causing the occurrence of the defect for each defective printing element candidate.

According to the data processing apparatus according to the present disclosure, the probability of actually causing the occurrence of the defect is derived and provided by notification for one or more defective printing element candidates estimated based on the defect position in the printed image. Accordingly, a user may employ processing that suppresses a decrease in productivity by eliminating the image defect, such as correction of the printing head and recovery processing of the printing head.

The printing element is provided in the printing head and forms a pixel constituting the printed image on the printing medium. Examples of the printing element include a nozzle provided in an ink jet head.

In the data processing apparatus according to another aspect, the one or more processors may be configured to derive a peak position in a profile of the defect from the captured data, and derive the probability that the defective printing element candidate actually causes the occurrence of the defect, based on the peak position.

According to the present aspect, the probability of actually causing the occurrence of the defect for each defective printing element candidate is derived based on the peak position in the profile of the defect.

In this aspect, the probability of actually causing the occurrence of the defect for each defective printing element candidate may be derived based on a distance between the peak position in the profile of the defect and the defective printing element candidate.

In this aspect, the distance between each defective printing element candidate and the peak position in the profile of the defect may be calculated, and a ratio of the distance calculated for each defective printing element candidate may be used as the probability of actually causing the occurrence of the defect for each defective printing element candidate.

In the data processing apparatus according to another aspect, the one or more processors may be configured to derive the probability that the defective printing element candidate actually causes the occurrence of the defect, by applying a trained learning model.

According to the present aspect, the probability that the defective printing element candidate actually causes the occurrence of the defect may be derived with high accuracy.

In the data processing apparatus according to another aspect, the one or more processors may be configured to provide notification of a position of the defective printing element candidate in the printing head.

According to the present aspect, the user may perceive the position of the defective printing element candidate.

In the data processing apparatus according to another aspect, the one or more processors may be configured to provide notification of a printing element number assigned to the printing elements provided in the printing head for the defective printing element candidate.

According to the present aspect, the user may perceive the number of the defective printing element candidate.

In the data processing apparatus according to another aspect, the one or more processors may be configured to provide notification of a color printed by the defective printing element candidate.

According to the present aspect, the user may perceive the color printed by the defective printing element candidate.

In the data processing apparatus according to another aspect, the one or more processors may be configured to provide notification of an occurrence frequency of the defective printing element candidate.

According to the present aspect, the user may perceive the occurrence frequency of the defective printing element candidate.

In the data processing apparatus according to another aspect, the one or more processors may be configured to provide notification of an occurrence count of the defective printing element candidate.

According to the present aspect, the user may perceive the occurrence count of the defective printing element candidate.

A data processing method according to the present disclosure is a data processing method comprising, via a computer, acquiring captured data generated by capturing a printed image printed on a printing medium, specifying a defect position indicating a position of a defect in the printed image by analyzing the captured data, estimating one or more defective printing element candidates as candidates of a defective printing element from a plurality of printing elements provided in a printing head, from the defect position in the printed image, deriving a probability that the defective printing element candidate actually causes occurrence of the defect, and providing notification of defective printing element candidate information including the probability of actually causing the occurrence of the defect for each defective printing element candidate.

A program according to the present disclosure is a program causing a computer to implement a function of acquiring captured data generated by capturing a printed image printed on a printing medium, a function of specifying a defect position indicating a position of a defect in the printed image by analyzing the captured data, a function of estimating one or more defective printing element candidates as candidates of a defective printing element from a plurality of printing elements provided in a printing head, from the defect position in the printed image, a function of deriving a probability that the defective printing element candidate actually causes occurrence of the defect, and a function of providing notification of defective printing element candidate information including the probability of actually causing the occurrence of the defect for each defective printing element candidate.

A test apparatus according to the present disclosure is a test apparatus comprising an imaging apparatus that captures a printed image printed on a printing medium, one or more processors, and one or more memories in which a program executed by the one or more processors is stored, in which the one or more processors are configured to, by executing an instruction of the program, acquire captured data generated using the imaging apparatus, specify a defect position indicating a position of a defect in the printed image by analyzing the captured data, estimate one or more defective printing element candidates as candidates of a defective printing element from a plurality of printing elements provided in a printing head, from the defect position in the printed image, derive a probability that the defective printing element candidate actually causes occurrence of the defect, and provide notification of defective printing element candidate information including the probability of actually causing the occurrence of the defect for each defective printing element candidate.

A printing system according to the present disclosure is a printing system comprising one or more printing heads, a moving apparatus that relatively moves the printing head and a printing medium, an imaging apparatus that captures a printed image printed on the printing medium using the printing head, a data processing apparatus that processes captured data generated using the imaging apparatus, one or more first processors, and one or more first memories in which a first program executed by the one or more first processors is stored, in which the one or more first processors are configured to, by executing an instruction of the first program, acquire captured data generated by capturing the printed image printed on the printing medium, specify a defect position indicating a position of a defect in the printed image by analyzing the captured data, estimate one or more defective printing element candidates as candidates of a defective printing element from a plurality of printing elements provided in the printing head, from the defect position in the printed image, derive a probability that the defective printing element candidate actually causes occurrence of the defect, and provide notification of defective printing element candidate information including the probability of actually causing the occurrence of the defect for each defective printing element candidate.

The printing system according to another aspect may further comprise a recovery processing apparatus that performs recovery processing on the printing head.

According to the present aspect, the user who has perceived the defective printing element candidate may perform the recovery processing on the printing head.

A cleaning apparatus that cleans the printing head may be applied as the recovery processing apparatus. Cleaning of the printing head may include wiping of a printing surface.

The printing system according to another aspect may further comprise one or more second processors, and one or more second memories in which a second program executed by the one or more second processors is stored, in which the one or more second processors are configured to, by executing an instruction of the second program, perform the recovery processing of the defective printing element candidate using the recovery processing apparatus.

According to the present aspect, the user may perform the recovery processing of the defective printing element candidate using the recovery processing apparatus.

In the printing system according to another aspect, the one or more first processors may be configured to provide notification indicating that replacement of the printing head provided with the defective printing element candidate is required.

According to the present aspect, the user may determine whether or not to replace the printing head.

In a case where the printing head is configured to be partially replaceable, the user may replace a part of the printing head.

The printing system according to another aspect may further comprise one or more third processors, and one or more third memories in which a third program executed by the one or more third processors is stored, in which the one or more third processors are configured to, by executing an instruction of the third program, perform masking processing of masking the defective printing element candidate as an unused printing element, and perform printing at a printing position at which the unused printing element performs printing, using a normal printing element.

According to the present aspect, corrected printing in which the occurrence of the defect in the printed image is suppressed may be performed.

In the printing system according to another aspect, the one or more third processors may be configured to acquire information about a defective printing element stored in advance, perform masking processing of masking the defective printing element as the unused printing element, and perform printing at the printing position at which the unused printing element performs printing, using the normal printing element.

According to the printing system of the present aspect, corrected printing may be performed using the information about the defective printing element stored in advance.

According to the present disclosure, the probability of actually causing the occurrence of the defect is derived and provided by notification for one or more defective printing element candidates estimated based on the defect position in the printed image. Accordingly, the user may employ processing that suppresses a decrease in productivity by eliminating the image defect, such as correction of the printing head and recovery processing of the printing head.

### BRIEF DESCRIPTION OF THE DRAWINGS

Fig. 1 is an overall configuration diagram of an ink jet printing system according to an embodiment.
Fig. 2 is a schematic diagram illustrating a configuration example of a maintenance apparatus applied to the inkjet printing system illustrated in Fig. 1.
Fig. 3 is a perspective view illustrating a configuration example of an ink jet head.
Fig. 4 is a plan view illustrating a nozzle disposition example of the ink jet head illustrated in Fig. 3.
Fig. 5 is a schematic diagram illustrating a configuration example of a test apparatus.
Fig. 6 is a functional block diagram illustrating an electric configuration of the ink jet printing system illustrated in Fig. 1.
Fig. 7 is a functional block diagram illustrating a configuration example of a read data processing portion illustrated in Fig. 6.
Fig. 8 is a functional block diagram illustrating a configuration example of a test data processing portion illustrated in Fig. 6.
Fig. 9 is a block diagram schematically illustrating an example of a hardware configuration of the electric configuration illustrated in Fig. 6.
Fig. 10 is a flowchart illustrating a procedure of a data processing method according to the embodiment.

### DESCRIPTION OF THE PREFERRED EMBODIMENTS

Hereinafter, an embodiment of the present invention will be described in detail in accordance with the accompanying drawings. In the present specification, the same constituents will be designated by the same reference numerals, and duplicate descriptions will be omitted, as appropriate.

### [Overall Configuration of Ink Jet Printing System]

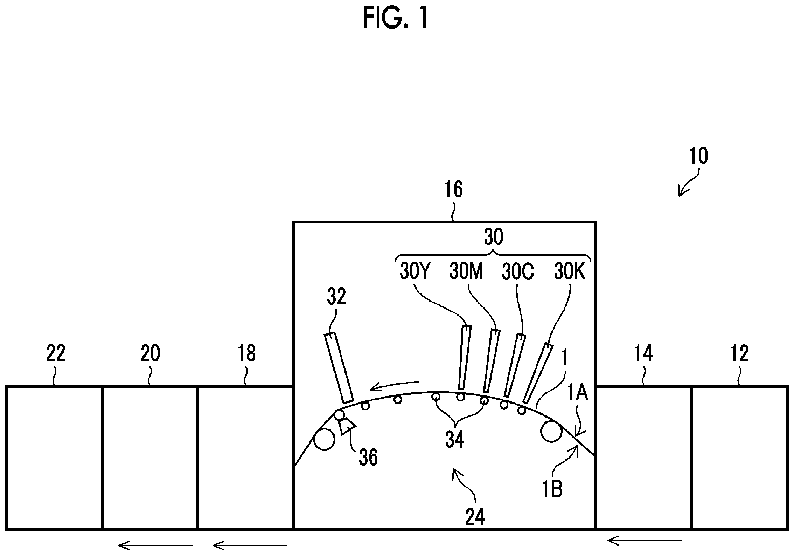

Fig. 1 is an overall configuration diagram of an ink jet printing system according to the embodiment. Arrow lines illustrated in Fig. 1 indicate a substrate transport direction that is a transport direction of a film substrate 1 in each apparatus provided in an ink jet printing system 10. The substrate transport direction indicates a direction in which the film substrate 1 proceeds.

The inkjet printing system 10 is a printing system to which a single pass method is applied and prints a color image on the film substrate 1 using aqueous color inks. The film substrate 1 is a transparent medium used for flexible packaging and is a non-permeable medium.

Examples of the film substrate 1 include oriented nylon (ONY), oriented polypropylene (OPP), and polyethylene terephthalate (PET). The inkjet printing system 10 creates a printed article of reverse printing that is visually recognized from a substrate support surface 1B on a side opposite to a printing surface 1A with respect to the film substrate 1. The inkjet printing system 10 can also create a printed article of surface printing that is visually recognized from the printing surface 1A.

Being non-permeable refers to having non-permeability with respect to an aqueous primer and an aqueous ink, described later. Flexible packaging refers to packaging using a material that deforms depending on a shape of an article to be packaged. Being transparent refers to having visible light transmittance of greater than or equal to 30% and less than or equal to 100% and preferably greater than or equal to 70% and less than or equal to 100%. The film substrate 1 according to the embodiment is an example of a printing medium.

The inkjet printing system 10 comprises a substrate supply apparatus 12, a precoating apparatus 14, a jetting apparatus 16, a drying apparatus 18, a test apparatus 20, a collecting apparatus 22, and a transport apparatus 24. Hereinafter, each part will be described in detail.

### [Substrate Supply Apparatus]

A transport method of a roll-to-roll method is applied to the inkjet printing system 10. The substrate supply apparatus 12 comprises a feed roll on which the film substrate 1 before the image is printed is wound. The feed roll comprises a reel that is supported in a rotatable manner.

The substrate supply apparatus 12 may comprise a corona treatment apparatus that performs reforming processing on the printing surface 1A of the film substrate 1. The printing surface 1A of the film substrate 1 on which the reforming processing is performed has surface free energy suitable for an aqueous mixture of the aqueous primer and the aqueous ink and may secure wettability suitable for the aqueous mixture. The film substrate 1 is transported to the precoating apparatus 14.

### [Precoating Apparatus]

The precoating apparatus 14 is disposed at a position that is downstream of the substrate supply apparatus 12 and upstream of the jetting apparatus 16 in the substrate transport direction. The precoating apparatus 14 coats the printing surface 1A of the film substrate 1 with a precoating liquid.

The precoating apparatus 14 may comprise a precoating drying apparatus. The precoating drying apparatus dries the precoating liquid with which the film substrate 1 is coated. A liquid such as an aqueous primer liquid containing a component that insolubilizes or thickens the aqueous ink may be applied as the precoating liquid. The film substrate 1 that is coated with the precoating liquid and on which the precoating liquid is dried is transported to the jetting apparatus 16.

### [Jetting Apparatus]

The jetting apparatus 16 comprises an ink jet head 30K, an ink jet head 30C, an ink jet head 30M, and an ink jet head 30Y.

The ink jet head 30K, the ink jet head 30C, the ink jet head 30M, and the ink jet head 30Y jet a black ink, a cyan ink, a magenta ink, and a yellow ink, respectively. Hereinafter, the inkjet head 30K and the like will be referred to as an inkjet head 30 unless otherwise required to distinguish therebetween.

The aqueous ink jetted from the ink jet head 30 refers to an ink obtained by dissolving or dispersing a coloring material such as a pigment in a solvent soluble in water. An organic-based pigment is used as the pigment of the aqueous ink. A viscosity of the aqueous ink is greater than or equal to 0.5 centipoises and less than or equal to 5.0 centipoises.

The ink jet head 30 prints the color image on the film substrate 1 by jetting the color inks to the printing surface 1A of the film substrate 1 transported using the transport apparatus 24.

A disposition and a posture in which a nozzle surface for jetting the ink is positioned and directed to face a substrate transport surface of a substrate transport path that is a transport path of the film substrate 1 are applied to the inkjet head 30. The inkjet head 30 is disposed at an equal interval along the substrate transport direction.

The ink jet head 30 comprises a plurality of nozzles. The nozzles may include nozzle openings and ink flow channels. The inkjet head 30 comprises an energy generation element for each nozzle. A plurality of nozzle openings are disposed on the nozzle surface of the ink jet head 30. A water-repellent film is formed on the nozzle surface of the inkjet head 30.

Piezoelectric elements may be applied as the energy generation elements. The ink jet head 30 comprising the piezoelectric elements jets ink liquid droplets from the nozzle openings using flexural deformation of the piezoelectric elements. Heaters may be applied as the energy generation elements. The ink jet head 30 comprising the heaters jets ink liquid droplets from the nozzle openings using a film boiling phenomenon of the ink.

A line type head in which a plurality of nozzles are disposed along an overall length of the film substrate 1 in a substrate width direction is applied as the inkjet head 30. The inkjet printing system 10 may perform printing of the single pass method of performing printing on an entire surface of a printing region of the film substrate 1 by relatively moving the inkjet head 30 and the film substrate 1 once. A serial type head may also be applied as the inkjet head 30.

A structure in which a plurality of head modules are connected in the substrate width direction may be applied to the line type inkjet head 30. The substrate width direction is a direction that is orthogonal to the substrate transport direction and that is parallel to the printing surface of the film substrate 1. The substrate transport direction according to the embodiment is an example of a medium transport direction. The substrate width direction according to the embodiment is an example of a medium width direction.

While an aspect in which the aqueous ink of four colors is applied is illustrated in Fig. 1, ink colors are not limited to the four colors of black, cyan, magenta, and yellow. For example, an aspect in which a light color ink of light magenta, light cyan, or the like is applied, or an aspect in which a specific color ink of white, green, orange, violet, clear, metallic, or the like is applied can be applied. In addition, a disposition order of the inkjet heads of each color is not limited to the example illustrated in Fig. 1.

The jetting apparatus 16 comprises a scanner 32. The scanner 32 comprises an imaging device that captures a test pattern image printed on the printing surface of the film substrate 1 and that converts a captured image into an electric signal.

In Fig. 1, an illumination apparatus that irradiates the printing surface of the film substrate 1 with illumination light is not illustrated. In a case where a transparent film substrate 1 is applied, the illumination apparatus is disposed on a side of the film substrate 1 closer to the substrate support surface 1B. Meanwhile, in a case where an opaque film substrate 1 such as paper is applied, the illumination apparatus is disposed on a side of the film substrate 1 closer to the printing surface 1A.

The test pattern image may be referred to as a test chart, a test pattern, a test image, and the like. Examples of the test pattern image include a test pattern image referred to as a ladder pattern, a 1-on N-off pattern, and the like.

Examples of the imaging device include a CCD image sensor and a color CMOS image sensor. CMOS is the abbreviation for Complementary Metal Oxide Semiconductor.

The ink jet printing system 10 specifies a defective nozzle in the ink jet head 30 based on read data of the test pattern image output from the scanner 32. The ink jet printing system 10 performs jetting correction of the inkjet head 30 using defective nozzle information.

The film substrate 1 on which the test pattern image is captured using the scanner 32 is transported to the drying apparatus 18.

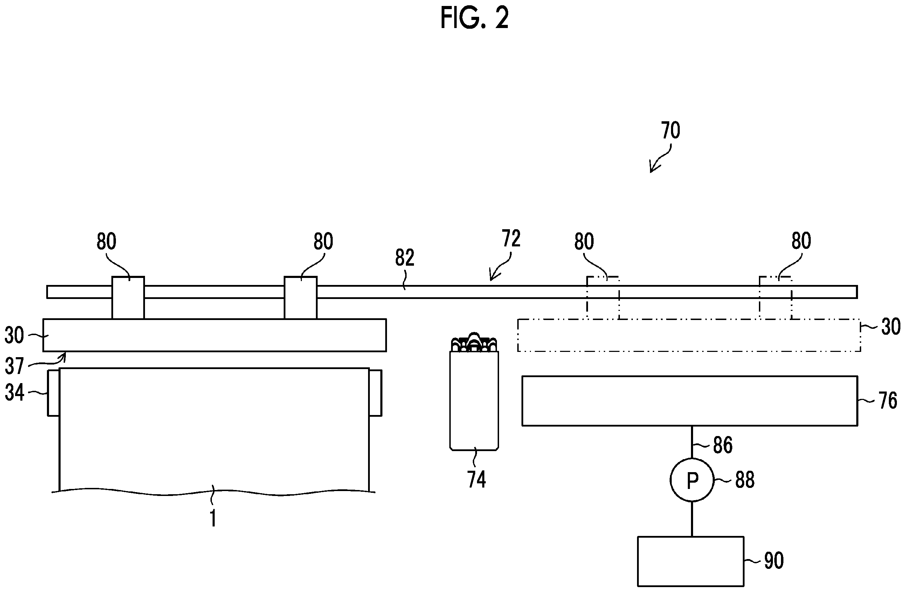

The ink jet printing system 10 comprises a maintenance apparatus that performs maintenance of the ink jet head 30. In Fig. 1, the maintenance apparatus is not illustrated. The maintenance apparatus is illustrated in Fig. 2 using reference numeral 70.

### [Drying Apparatus]

The drying apparatus 18 is disposed at a position that is downstream of the jetting apparatus 16 in the substrate transport direction and that is upstream of the test apparatus 20 in the substrate transport direction. The drying apparatus 18 comprises a drying module that dries the aqueous ink adhered to the printing surface 1A of the film substrate 1. The film substrate 1 on which the aqueous ink is dried is transported to the test apparatus 20.

### [Test Apparatus]

The test apparatus 20 is disposed at a position that is downstream of the drying apparatus 18 in the substrate transport direction and that is upstream of the collecting apparatus 22 in the substrate transport direction. The test apparatus 20 tests whether or not there is a defect in a printed image printed on the film substrate 1.

The test apparatus 20 comprises an imaging unit that captures the printed image, and an illumination unit that irradiates the film substrate 1 with illumination light. The ink jet printing system 10 may determine whether or not there is a defect in the printed image based on captured data of the printed image. The film substrate 1 for which the captured image is tested using the test apparatus 20 is transported to the collecting apparatus 22.

### [Collecting Apparatus]

The collecting apparatus 22 collects the film substrate 1 on which the image is printed. Specifically, the film substrate 1 on which the image is printed is wound onto a winding roll.

### [Transport Apparatus]

The roll-to-roll method is applied to the transport apparatus 24. The transport apparatus 24 transports the film substrate 1 from the substrate supply apparatus 12 to the collecting apparatus 22 along the substrate transport path in the substrate transport direction in an order of the substrate supply apparatus 12, the precoating apparatus 14, the jetting apparatus 16, the drying apparatus 18, the test apparatus 20, and the collecting apparatus 22. The substrate supply apparatus 12 and the collecting apparatus 22 may be included in the transport apparatus 24.

The transport apparatus 24 comprises a plurality of pass rollers 34. One or more pass rollers 34 are disposed in each of the substrate supply apparatus 12, the precoating apparatus 14, the jetting apparatus 16, the drying apparatus 18, the test apparatus 20, and the collecting apparatus 22.

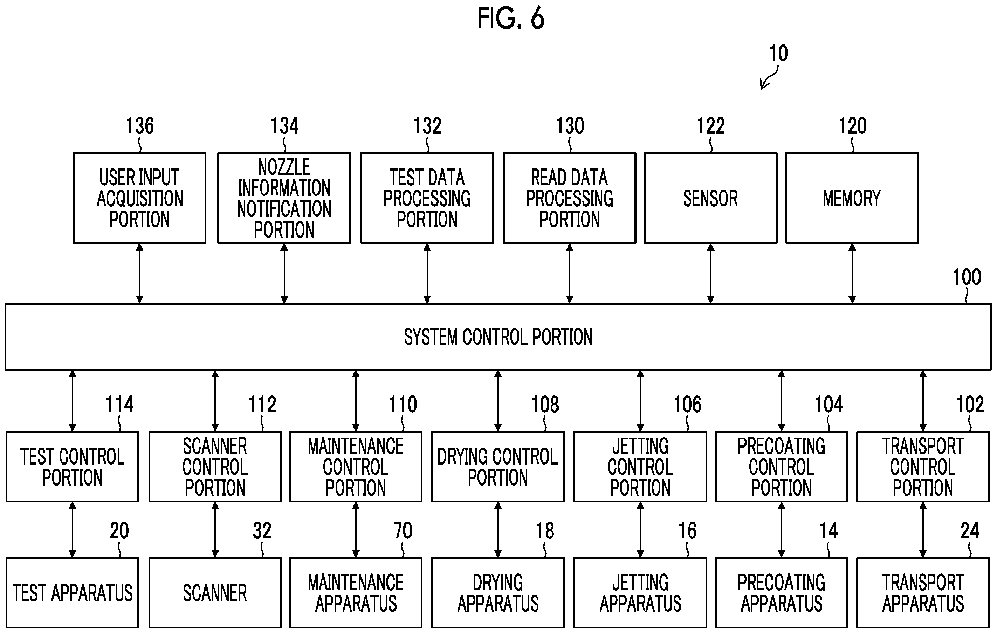

The transport apparatus 24 comprises one or more tension pickups 36 disposed in each of the substrate supply apparatus 12, the precoating apparatus 14, the jetting apparatus 16, the drying apparatus 18, the test apparatus 20, and the collecting apparatus 22. The tension pickups 36 detect tension applied to the film substrate 1. Detection signals of the tension pickups 36 are transmitted to a transport control portion. The transport control portion is illustrated in Fig. 6 using reference numeral 102. In Fig. 1, the tension pickup 36 provided in the jetting apparatus 16 is illustrated, and the tension pickups 36 provided in the substrate supply apparatus 12 and the like are not illustrated.

### [Configuration Example of Maintenance Apparatus]

Fig. 2 is a schematic diagram illustrating a configuration example of the maintenance apparatus applied to the ink jet printing system illustrated in Fig. 1. The maintenance apparatus 70 illustrated in Fig. 2 is disposed to be arranged with the jetting apparatus 16 in a direction passing through the page of Fig. 1.

The maintenance apparatus 70 illustrated in Fig. 2 comprises a head moving apparatus 72, a wiping apparatus 74, and a capping apparatus 76. The head moving apparatus 72 moves the inkjet head 30 between a printing position and maintenance positions.

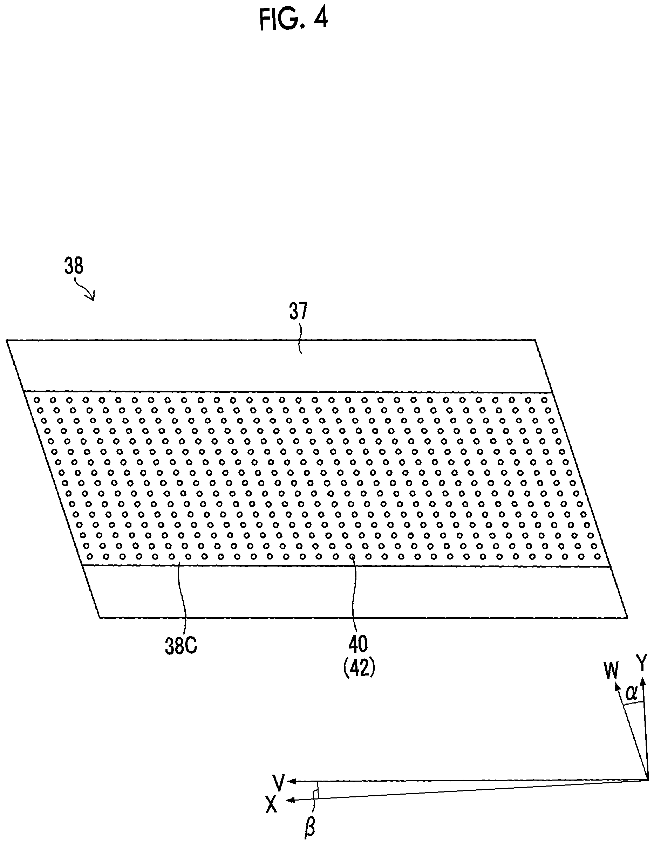

Fig. 2 illustrates a configuration in which a carriage 80 connected to the inkjet head 30 and a guide 82 for supporting the carriage 80 are comprised, as a configuration example of the head moving apparatus 72. In Fig. 4, a linear motion mechanism connected to the carriage 80 and a motor and the like connected to the linear motion mechanism are not illustrated.

The printing position is a position of the inkjet head 30 at which printing is performed on the film substrate 1 by jetting the ink from the ink jet head 30. In Fig. 2, the ink jet head 30 positioned at the printing position is illustrated using a solid line. The maintenance positions are positions of the ink jet head 30 at which the maintenance of the ink jet head 30 is performed.

The maintenance of the inkjet head 30 includes wiping of nozzle surfaces 37 to which the wiping apparatus 74 is applied, purging that discharges the ink to the capping apparatus 76 from the nozzle openings by operating a jetting element of each nozzle, and moisturizing to which a moisturizing liquid inside the capping apparatus 76 is applied.

The capping apparatus 76 is connected to a discharge tank 90 through a discharge flow channel 86 and a discharge pump 88. The ink discharged to the capping apparatus 76 is fed to the discharge tank 90 by operating the discharge pump 88.

In Fig. 2, the ink jet head 30 at a position at which the maintenance to which the capping apparatus 76 is applied is performed among the maintenance positions is illustrated using a dot-dashed line. The maintenance positions include a position at which the wiping of the nozzle surfaces 37 is performed using the wiping apparatus 74.

The wiping apparatus 74 wipes the nozzle surfaces 37 of the inkjet head 30 moving along the guide 82 by causing a web that is a wiping member having a sheet shape to travel and bringing the traveling web into contact with the nozzle surfaces 37.

The maintenance apparatus 70 comprises a head elevating apparatus. The head elevating apparatus elevates the ink jet head 30 at the printing position. In addition, the head elevating apparatus elevates the ink jet head 30 in a case where purging processing of the ink jet head 30 is performed and in a case where moisturizing processing of the inkjet head 30 is performed using the capping apparatus. The head elevating apparatus is not illustrated.

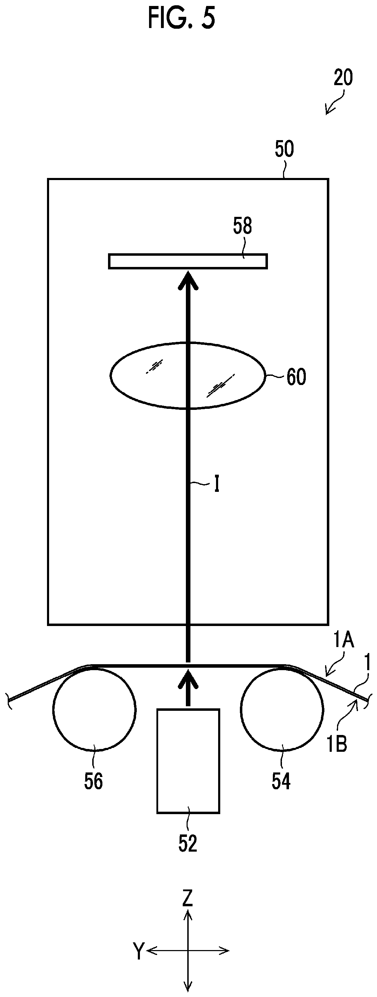

Raising of the inkjet head 30 is moving of the inkjet head 30 in an upward direction of a height direction indicated using reference numeral Z in Fig. 5. Lowering of the ink jet head 30 is moving of the ink jet head 30 in a downward direction of the height direction. The upward direction is a direction having a component in a vertical upward direction, and the downward direction is a direction having a component in a vertical downward direction. The maintenance apparatus 70 illustrated in Fig. 2 is an example of a recovery processing apparatus that performs recovery processing of a defective printing element candidate.

### [Configuration Example of Ink Jet Head]

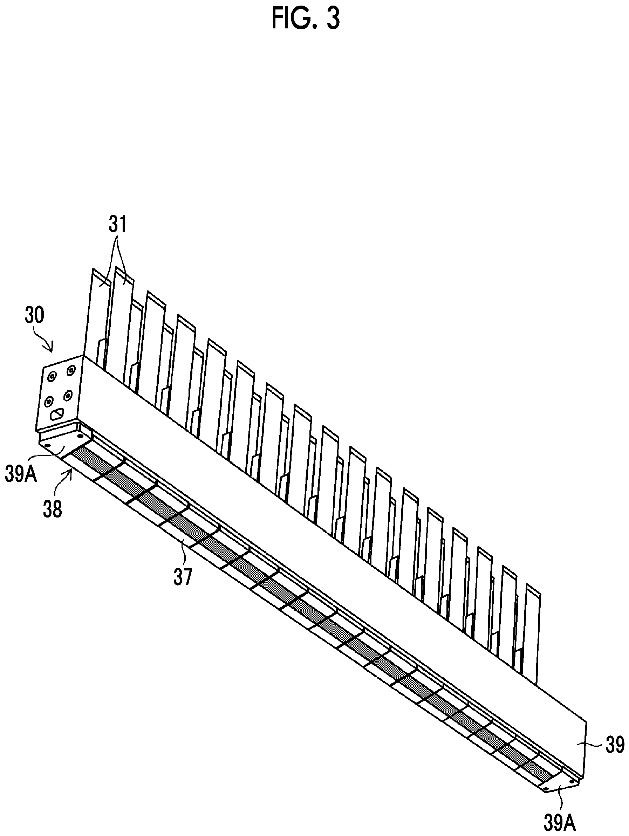

Fig. 3 is a perspective view illustrating a configuration example of the inkjet head. The inkjet head 30 illustrated in Fig. 3 has a structure in which a plurality of head modules 38 are linearly connected along a longitudinal direction of the inkjet head 30. The plurality of head modules 38 are integrated and supported using a head frame 39.

The inkjet head 30 is a line head in which a plurality of nozzles are disposed along a length corresponding to an overall width of the film substrate 1 in the substrate width direction. In Fig. 3, the nozzles are not illustrated. The nozzles are illustrated with reference numeral 40 in Fig. 4.

Plane shapes of the nozzle surfaces 37 of the head modules 38 are parallelograms. Dummy plates 39A are attached to both ends of the head frame 39. The plane shapes of the nozzle surfaces 37 of the ink jet head 30 form an oblong shape as a whole together with the head modules 38 and the dummy plates 39A.

Flexible substrates 31 are attached to the head modules 38. The flexible substrates 31 are wiring members that transmit drive voltages to be supplied to the head modules 38. One end of the flexible substrates 31 is electrically connected to the head modules 38, and the other end of the flexible substrates 31 is electrically connected to a drive voltage supply circuit. The drive voltage supply circuit is not illustrated.

Each of the plurality of head modules 38 provided in the ink jet head 30 can be associated with module numbers indicating positions of the head modules 38 in an order from the head module 38 disposed at one end of the inkjet head 30.

Fig. 4 is a plan view illustrating a nozzle disposition example of the ink jet head illustrated in Fig. 3. A center part of the nozzle surface 37 of each head module 38 comprises a nozzle disposition portion 38C having a strip shape. The nozzle disposition portion 38C actually functions as the nozzle surface 37.

A plurality of nozzles 40 are disposed in the nozzle disposition portion 38C. The nozzles 40 include nozzle openings 42 formed on the nozzle surface 37. A structure example of the nozzles 40 will be described later. In the following description, disposition of the nozzles 40 may be replaced with disposition of the nozzle openings 42.

The head module 38 illustrated in Fig. 4 has a plane shape of a parallelogram having an edge surface on a long edge side along a direction V having an inclination of an angle β with respect to the substrate width direction illustrated with reference numeral X and an edge surface on a short edge side along a direction W having an inclination of an angle α with respect to the substrate transport direction illustrated with reference numeral Y

In the head module 38, the plurality of nozzles 40 are disposed in a matrix in a row direction along the direction V and a column direction along the direction W. The nozzles 40 may be disposed along a row direction along the substrate width direction and a column direction that obliquely intersects with the substrate width direction.

In the case of the ink jet head 30 in which the plurality of nozzles 40 are disposed in a matrix, a projected nozzle column obtained by projecting each nozzle 40 in the matrix disposition along the column direction of the nozzles can be considered to be equivalent to one nozzle column in which each nozzle 40 is arranged at an almost equal interval in the column direction of the nozzles with a density for achieving a maximum recording resolution. The projected nozzle column is a nozzle column obtained by orthogonally projecting each nozzle 40 in the matrix disposition along the column direction of the nozzles.

The almost equal interval means an actually equal interval as a jetting point recordable in a printing apparatus. For example, a concept of an equal interval also includes a case where an interval is slightly varied by taking into consideration at least one of manufacturing error or moving of a liquid droplet on the substrate caused by landing interference. The projected nozzle column corresponds to an actual nozzle column. In a case where the projected nozzle column is taken into consideration, each nozzle 40 can be associated with a nozzle number indicating a nozzle position in an arrangement order of projected nozzles arranged along the column direction of the nozzles.

While the inkjet head 30 in which the plurality of nozzles are disposed in a matrix is illustrated in Fig. 4, one column disposition may be applied, or zigzag disposition of two columns may be applied to the plurality of nozzles.

An actual density of the nozzles 40 in the substrate width direction corresponds to a printing resolution in the substrate width direction. Examples of the printing resolution in the substrate width direction include 1200 dots per inch. Dots per inch indicating the number of dots per inch may be referred to as dpi using the abbreviation for Dot Per Inch.

### [Configuration Example of Test Apparatus]

Fig. 5 is a schematic diagram illustrating a configuration example of hardware of the test apparatus. Reference numeral Z illustrated in Fig. 5 indicates the height direction that is orthogonal to the substrate transport direction and the substrate width direction. The test apparatus 20 illustrated in Fig. 5 generates the captured data of the printed image by capturing the printed image printed on the film substrate 1 supported using a transport roller 54 and a transport roller 56.

The test apparatus 20 comprises a scanner unit 50 and an illumination unit 52. The scanner unit 50 is disposed on the side of the film substrate 1 closer to the printing surface 1A and has a posture in which a light-receiving surface of an image sensor 58 faces the printing surface 1A of the film substrate 1. The scanner unit 50 images the printing surface 1A of the film substrate 1.

The illumination unit 52 is disposed on the side of the film substrate 1 closer to the substrate support surface 1B and has a posture in which an emission surface of illumination light faces the substrate support surface 1B of the film substrate 1. The illumination unit 52 irradiates the film substrate 1 with illumination light I from the side closer to the substrate support surface 1B.

A configuration in which a plurality of LEDs are comprised and the plurality of LEDs are two-dimensionally disposed may be applied to the illumination unit 52. The plurality of LEDs may be disposed along the overall length of the film substrate 1 in the substrate width direction. The plurality of LEDs may be disposed along an overall length of an irradiation region of the illumination light in the substrate transport direction. LED is the abbreviation for Light Emitting Diode.

The scanner unit 50 comprises the image sensor 58 as an imaging device. The image sensor 58 has an imaging region having a length that exceeds the overall length of the film substrate 1 in the substrate width direction. The image sensor 58 receives the illumination light I transmitted through the film substrate 1, generates captured data by converting an optical image formed by the received illumination light I into an electric signal, and outputs the captured data.

The scanner unit 50 comprises an image forming lens 60. The image forming lens 60 causes the optical image of the image printed on the film substrate 1 to be formed on the image sensor 58 by condensing the illumination light I transmitted through the film substrate 1. A lens group including a plurality of lenses may be applied as the image forming lens 60. The scanner unit 50 may comprise two or more types of optical elements such as lenses.

Fig. 5 illustrates a configuration of the test apparatus 20 that performs transmitted light imaging with respect to the transparent film substrate 1. However, in a case where an opaque substrate such as paper is applied, the illumination unit 52 may be disposed on the same side as the scanner unit 50 for the opaque substrate, and reflected light imaging of receiving reflected light that is reflected from the opaque substrate may be performed. The scanner unit 50 of the embodiment is an example of an imaging apparatus.

### [Electric Configuration of Ink Jet Printing System]

Fig. 6 is a functional block diagram illustrating an electric configuration of the ink jet printing system illustrated in Fig. 1. The ink jet printing system 10 comprises a system control portion 100, a transport control portion 102, a precoating control portion 104, a jetting control portion 106, a drying control portion 108, a maintenance control portion 110, a scanner control portion 112, and a test control portion 114. In addition, the ink jet printing system 10 comprises a memory 120 and a sensor 122.

The system control portion 100 controls an overall operation of the inkjet printing system 10 in an integrated manner. The system control portion 100 transmits instruction signals to various control portions. The system control portion 100 functions as a memory controller that controls storage of data in the memory 120 and readout of data from the memory 120.

The system control portion 100 acquires a sensor signal transmitted from the sensor 122 and transmits the instruction signals based on the sensor signal to various control portions. The sensor 122 illustrated in Fig. 6 includes the tension pickup 36 illustrated in Fig. 1. In addition, the sensor 122 includes various sensors such as a position detection sensor and a temperature sensor provided in each part of the inkjet printing system 10.

The transport control portion 102 sets a transport condition based on the instruction signal transmitted from the system control portion 100 and controls an operation of the transport apparatus 24 based on the set transport condition. For example, the transport control portion 102 controls an operation of a motor connected to a drive roller or the like provided in the transport apparatus 24, by applying the transport condition applied to the transport apparatus 24.

In addition, the transport control portion 102 individually controls transport tension to be applied to the film substrate 1 in each section such as the precoating apparatus 14 and the jetting apparatus 16 provided in the ink jet printing system 10. That is, the transport control portion 102 controls the transport tension of the film substrate 1 in each section from the substrate supply apparatus 12 to the collecting apparatus 22.

The precoating control portion 104 sets a processing condition for precoating processing based on the instruction signal transmitted from the system control portion 100 and controls an operation of the precoating apparatus 14 based on the set processing condition.

The jetting control portion 106 sets a printing condition based on the instruction signal transmitted from the system control portion 100 and controls an operation of the jetting apparatus 16 based on the set printing condition.

The jetting control portion 106 comprises an image processing portion that generates halftone data based on printing data by performing color separation processing, color conversion processing, correction processing for each processing, and halftone processing on the printing data.

The jetting control portion 106 comprises a drive voltage generation portion that generates a drive voltage to be supplied to the ink jet head 30. The jetting control portion 106 comprises a drive voltage output portion that supplies the drive voltage to the ink jet head 30.

The jetting control portion 106 performs the jetting correction of the inkjet head 30. For example, the jetting control portion 106 performs printing on a printing position of an unused nozzle without using the unused nozzle stored in advance, by using a normal nozzle positioned adjacent to the unused nozzle.

The drying control portion 108 sets a processing condition for drying processing applied to the drying apparatus 18 based on the instruction signal transmitted from the system control portion 100 and controls an operation of the drying apparatus 18 based on the set processing condition.

The maintenance control portion 110 sets a maintenance condition applied to the maintenance apparatus 70 based on the instruction signal transmitted from the system control portion 100 and controls an operation of the maintenance apparatus 70 based on the set maintenance condition.

The scanner control portion 112 sets a reading condition applied to the scanner 32 based on the instruction signal transmitted from the system control portion 100 and controls an operation of the scanner 32 based on the set reading condition.

The scanner control portion 112 acquires the read data of the test pattern image transmitted from the scanner 32 and transmits the acquired read data of the test pattern image to a read data processing portion 130.

The test control portion 114 sets a test condition applied to the test apparatus 20 based on the instruction signal transmitted from the system control portion 100 and controls an operation of the test apparatus 20 based on the set test condition.

The test control portion 114 acquires the captured data of the printed image transmitted from the test apparatus 20 as test data and transmits the acquired test data to a test data processing portion 132.

The memory 120 stores various programs, various parameters, and various types of data used in the ink jet printing system 10. The memory 120 includes regions for various operations performed by the system control portion 100 and the like.

The inkjet printing system 10 comprises the read data processing portion 130. The read data processing portion 130 detects a defective nozzle by analyzing the read data of the test pattern image generated using the scanner 32. The defective nozzle may include a non-jetting nozzle that does not jet the ink, and an abnormal nozzle of which a jetting position and a jetting amount do not fall within a defined range.

The defective nozzle is specified using the nozzle number indicating the nozzle position in the substrate width direction. The test pattern image is generated for each ink color, the read data of the test pattern image is analyzed for each ink color, and the defective nozzle is specified for each ink color. Here, each ink color is synonymous with each inkjet head 30.

The ink jet printing system 10 comprises the test data processing portion 132. The test data processing portion 132 tests the printed image of the film substrate 1 on which the drying processing is performed using the drying apparatus 18. That is, the test data processing portion 132 detects a defect such as a scratch and a streak in the printed image by analyzing the test data which is the captured data of the printed image. The test data processing portion 132 outputs a test result of the printed image.

The test data processing portion 132 estimates a defective nozzle candidate using an analysis result of the test data. That is, the test data processing portion 132 specifies a position of the defect in the test data and estimates one or more defective nozzle candidates using a correspondence relationship between the test data and the nozzles.

The test data processing portion 132 stores defective nozzle candidate information including a probability that the defective nozzle candidate actually causes occurrence of the image defect, a defect occurrence count, a defect occurrence frequency, and the like in the memory 120. Details of the estimation of the defective nozzle candidate to which the test data processing portion 132 is applied will be described later. The defective nozzle candidate according to the embodiment is an example of a defective printing element candidate.

The ink jet printing system 10 comprises a nozzle information notification portion 134. The nozzle information notification portion 134 acquires the defective nozzle candidate information and provides notification of the defective nozzle candidate information. An aspect of providing notification of displaying test information indicating the defective nozzle candidate information using a display apparatus may be applied to the nozzle information notification portion 134.

The inkjet printing system 10 comprises a user input information acquisition portion 136. The user input information acquisition portion 136 acquires various types of information input by a user using a keyboard or the like. Examples of the various types of information input by the user include information that provides an instruction to perform the maintenance of the inkjet head 30 and that is input by the user who visually recognizes the defective nozzle candidate information.

### [Configuration Example of Read Data Processing Portion]

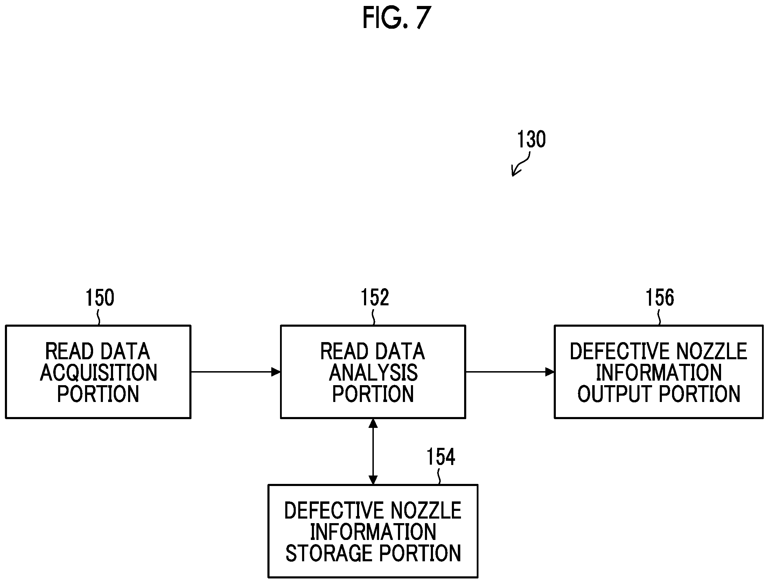

Fig. 7 is a functional block diagram illustrating a configuration example of the read data processing portion illustrated in Fig. 6. The read data processing portion 130 comprises a read data acquisition portion 150, a read data analysis portion 152, a defective nozzle information storage portion 154, and a defective nozzle information output portion 156.

The read data acquisition portion 150 acquires the read data of the test pattern image generated using the scanner 32 illustrated in Fig. 6. The read data acquisition portion 150 transmits the acquired read data of the test pattern image to the read data analysis portion 152.

The read data analysis portion 152 specifies the defective nozzle by analyzing the read data of the test pattern image acquired using the read data acquisition portion 150. The read data analysis portion 152 specifies the defective nozzle based on a missing part of the pattern, misregistration of the pattern, and a shape of the pattern in the test pattern image.

The read data analysis portion 152 stores the defective nozzle information including position information of the defective nozzle in the defective nozzle information storage portion 154. In addition, the read data analysis portion 152 transmits the defective nozzle information to the defective nozzle information output portion 156.

The defective nozzle information output portion 156 outputs the defective nozzle information. For example, the jetting control portion 106 acquires the defective nozzle information, performs masking processing on the defective nozzle, and performs the jetting correction on the defective nozzle. The defective nozzle information according to the embodiment is an example of defective printing element information.

### [Configuration Example of Test Data Processing Portion]

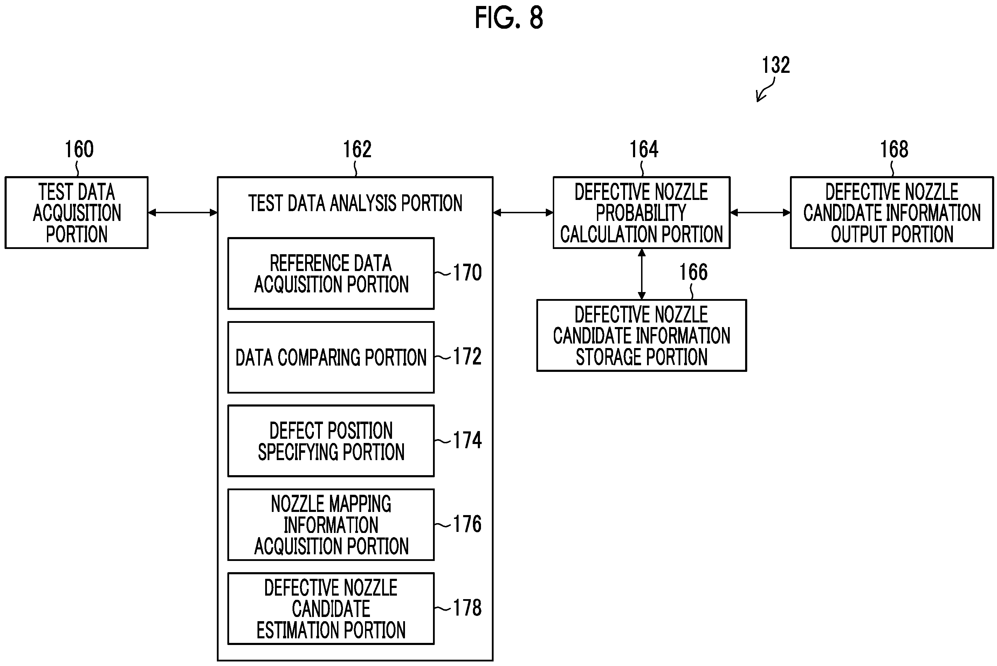

Fig. 8 is a functional block diagram illustrating a configuration example of the test data processing portion illustrated in Fig. 6. The test data processing portion 132 comprises a test data acquisition portion 160, a test data analysis portion 162, a defective nozzle probability calculation portion 164, a defective nozzle candidate information storage portion 166, and a defective nozzle candidate information output portion 168.

The test data acquisition portion 160 acquires the test data generated using the test apparatus 20 illustrated in Fig. 6. The test data acquisition portion 160 transmits the acquired test data to the test data analysis portion 162.

The test data analysis portion 162 estimates the defective nozzle candidate by analyzing the test data acquired using the test data acquisition portion 160. The test data analysis portion 162 transmits the defective nozzle candidate information including information about the estimation of the defective nozzle candidate to the defective nozzle probability calculation portion 164.

The test data analysis portion 162 comprises a reference data acquisition portion 170, a data comparing portion 172, a defect position specifying portion 174, a nozzle mapping information acquisition portion 176, and a defective nozzle candidate estimation portion 178.

The reference data acquisition portion 170 acquires reference data to be compared with the test data. The printing data in printing the printed image may be applied as the reference data, or captured data of a good printed image in which a defect has not occurred, such as the first printed image of each printing job, may be applied as the reference data.

The data comparing portion 172 specifies whether or not there is a defect in the test data by comparing the test data with the reference data. For example, the data comparing portion 172 specifies whether or not there is a defect from a difference between the test data and the reference data, by performing registration between the test data and the reference data and subtracting the reference data from the test data. In a preferable aspect, the data comparing portion 172 performs processing of matching resolutions between the test data and the reference data.

The data comparing portion 172 classifies the printed image into a good printed image and a defective printed image in accordance with a degree of the defect. The data comparing portion 172 stores and outputs classification information of the printed image. The user is notified of the classification information of the printed image output from the data comparing portion 172. For example, a stamp is assigned to the printed image classified as the defective printed image.

The defect position specifying portion 174 specifies the position of the defect in the test data. Here, the position of the defect in the test data includes the position of the defect in the substrate width direction. A pixel position of the image sensor 58 corresponding to the defect may be specified from the position of the defect in the substrate width direction.

The nozzle mapping information acquisition portion 176 acquires nozzle mapping information. The nozzle mapping information is information indicating a correspondence relationship between nozzle positions of the ink jet head 30 and pixel positions of the image sensor 58.

The nozzle mapping information acquisition portion 176 may read out the nozzle mapping information stored in advance. In addition, the nozzle mapping information acquisition portion 176 may acquire nozzle mapping correction information used in correcting the nozzle mapping information. The correction of the nozzle mapping information may suppress an effect of misregistration, rotation, skewing, and the like of the film substrate 1 in estimating the defective nozzle.

The defective nozzle candidate estimation portion 178 estimates positions of one or more defective nozzle candidates using the nozzle mapping information. In a case where an imaging resolution of the image sensor 58 is lower than the printing resolution, one pixel of the image sensor 58 includes a plurality of pixels of the printed image. In this case, a plurality of defective nozzle candidates are estimated for one defect.

In a case where the imaging resolution of the image sensor 58 is lower than the printing resolution, a region of the printed image corresponding to one pixel of the image sensor 58 is printed using a plurality of nozzles. In a case where the defective nozzle is one nozzle and one pixel of the printed image corresponding to the defective nozzle is missing, a feature corresponding to the defective nozzle appears in a specific pixel in the captured data of the image sensor 58 which is the test data.

Meanwhile, the feature corresponding to the defective nozzle may appear across multiple pixels in the captured data of the image sensor 58 because of an effect of reflection or the like of light. Therefore, the plurality of defective nozzle candidates can be further narrowed down by calculating a peak position of the feature corresponding to the defective nozzle as a centroid position approximated using a two-dimensional function or the like.

A trained learning model may be applied to the defective nozzle candidate estimation portion 178. For example, a trained learning model that has learned a set of the test data and the position of the defect as correct answer data may be applied to the defective nozzle candidate estimation portion 178. The defective nozzle candidate estimation portion 178 to which the trained learning model is applied may assign a score indicating likelihood of the defective nozzle for each of the plurality of defective nozzle candidates. The score indicating the likelihood of the defective nozzle may be handled as the probability of actually causing the occurrence of the image defect.

The defective nozzle candidate estimation portion 178 specifies a color of the defective nozzle candidate. The defective nozzle candidate estimation portion 178 calculates an amount of variation between a pixel value of the captured data of the image sensor 58 at a defect position and a pixel value of the reference data at a position corresponding to the defect position.

The defective nozzle candidate estimation portion 178 estimates a color of the defect using the calculated amount of variation. That is, the defective nozzle candidate estimation portion 178 derives a combination of the position and the color for the defective nozzle candidate.

The defective nozzle probability calculation portion 164 calculates the probability of actually causing the occurrence of the defect in the printed image for one or more defective nozzle candidates. In a case where there are a plurality of defective nozzle candidates, the defective nozzle probability calculation portion 164 may calculate the probability of actually causing the occurrence of the defect in the printed image for each defective nozzle candidate.

Specifically, the defective nozzle candidate estimation portion 178 creates a profile in the substrate width direction for the defect specified by the defect position specifying portion 174, by averaging pixel values in the substrate transport direction for each pixel position in the substrate width direction.

The defective nozzle candidate estimation portion 178 may estimate one or more defective nozzles by calculating a centroid position of a peak portion of the profile and calculating a peak position of the defect in pixel units of the printed image having a higher resolution than the original imaging resolution of the image sensor 58.

The defective nozzle probability calculation portion 164 may set the probability of actually causing the occurrence of the defect in the printed image to be relatively high for the defective nozzle candidate at a position relatively close from the peak portion of the profile. In addition, the defective nozzle probability calculation portion 164 may set the probability of actually causing the occurrence of the defect in the printed image to be relatively low for the defective nozzle candidate at a position relatively far from the peak portion of the profile.

For example, a distance between the centroid position of the peak portion and an ideal position of the defective nozzle candidate may be calculated for each defective nozzle candidate, and a ratio of the distance calculated for each defective nozzle candidate may be used as the probability of actually causing the occurrence of the defect in the printed image for each defective nozzle candidate.

The defective nozzle probability calculation portion 164 may calculate a probability of having a color that actually causes the occurrence of the defect in the printed image, for the color of the defective nozzle candidate. The defective nozzle probability calculation portion 164 may calculate the probability of actually causing the occurrence of the defect in the printed image and the probability of having the color that actually causes the occurrence of the defect in the printed image, for the defective nozzle candidate by applying the trained learning model.

The defective nozzle probability calculation portion 164 stores the defective nozzle candidate information including the probability of actually causing the occurrence of the defect in the printed image and the probability of having the color that actually causes the occurrence of the defect in the printed image, in the defective nozzle candidate information storage portion 166 for each defective nozzle candidate. In addition, the defective nozzle probability calculation portion 164 transmits the defective nozzle candidate information to the defective nozzle candidate information output portion 168.

The defective nozzle candidate information output portion 168 transmits the defective nozzle candidate information to the nozzle information notification portion 134 illustrated in Fig. 3. The nozzle information notification portion 134 provides notification of the defective nozzle candidate information transmitted from the defective nozzle candidate information output portion 168.

The defective nozzle candidate information may include the defect occurrence count for each defective nozzle candidate and the defect occurrence frequency for each defective nozzle candidate. That is, the test data processing portion 132 may comprise a defect occurrence count derivation portion that derives the defect occurrence count for each defective nozzle candidate, and a defect occurrence frequency derivation portion that derives the defect occurrence frequency for each defective nozzle candidate. The defective nozzle candidate information according to the embodiment is an example of defective printing element candidate information. Each defective nozzle candidate according to the embodiment is an example of each defective printing element candidate.

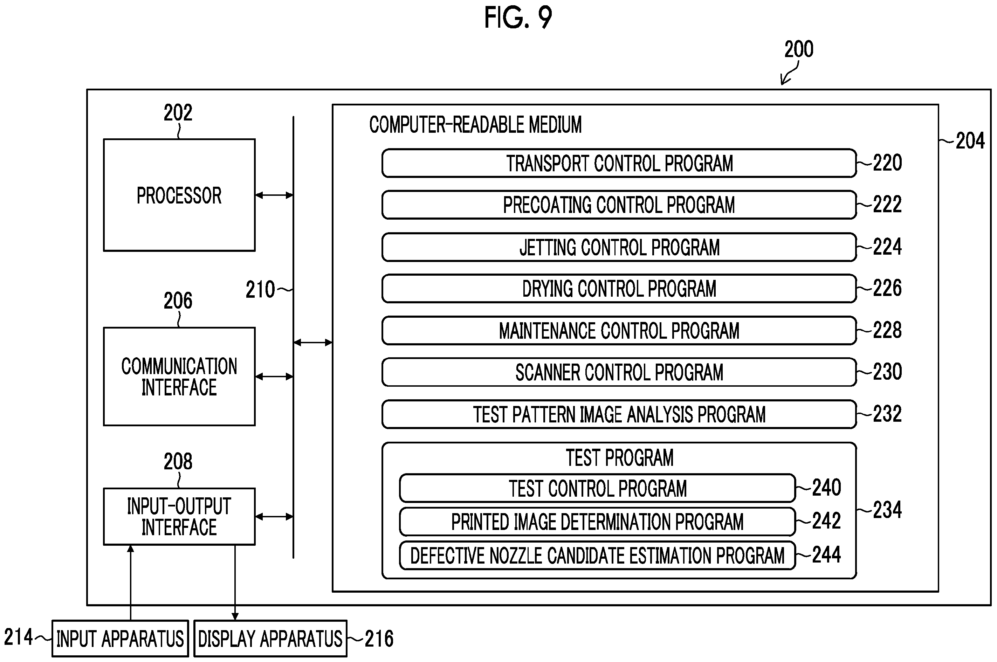

Fig. 9 is a block diagram schematically illustrating an example of a hardware configuration of the electric configuration illustrated in Figs. 6 to 8. A control apparatus 200 provided in the ink jet printing system 10 comprises a processor 202, a non-transitory tangible computer-readable medium 204, a communication interface 206, and an input-output interface 208.

A computer is applied as the control apparatus 200. The computer may be in a form of a server, a personal computer, a workstation, a tablet terminal, or the like.

The processor 202 includes a central processing unit (CPU). The processor 202 may include a graphics processing unit (GPU). The processor 202 is connected to the computer-readable medium 204, the communication interface 206, and the input-output interface 208 through a bus 210. An input apparatus 214 and a display apparatus 216 are connected to the bus 210 through the input-output interface 208.

The computer-readable medium 204 includes a memory that is a main memory, and a storage that is an auxiliary memory. A semiconductor memory, a hard disk apparatus, a solid state drive apparatus, and the like may be applied as the computer-readable medium 204. Any combination of a plurality of devices may be applied as the computer-readable medium 204.

The hard disk apparatus may be referred to as an HDD which is the abbreviation for Hard Disk Drive in English. The solid state drive apparatus may be referred to as an SSD which is the abbreviation for Solid State Drive in English.

The control apparatus 200 is connected to a network through the communication interface 206 and is connected to be capable of communicating with an external apparatus. A local area network (LAN) or the like may be applied as the network. The network is not illustrated.

The computer-readable medium 204 stores a transport control program 220, a precoating control program 222, a jetting control program 224, a drying control program 226, and a maintenance control program 228.

The transport control program 220 corresponds to a transport control applied to the transport apparatus 24 illustrated in Fig. 6. The precoating control program 222 corresponds to a precoating control applied to the precoating apparatus 14.

The jetting control program 224 corresponds to a printing control applied to the jetting apparatus 16. The jetting control program 224 includes a jetting correction program for performing the jetting correction of the ink jet head 30. The jetting correction program according to the embodiment is an example of a third program.

The drying control program 226 corresponds to a drying control applied to the drying apparatus 18. The maintenance control program 228 corresponds to a maintenance control of the inkjet head 30 applied to the maintenance apparatus 70. The maintenance control program 228 according to the embodiment is an example of a second program.

In addition, the computer-readable medium 204 stores a scanner control program 230, a test pattern image analysis program 232, and a test program 234. The scanner control program 230 corresponds to a reading control of the scanner 32 applied to the scanner control portion 112.

The test pattern image analysis program 232 corresponds to analysis processing of the test pattern image applied to the read data processing portion 130. The test program 234 corresponds to testing of the printed image applied to the test apparatus 20.

The test program 234 includes a test control program 240, a printed image determination program 242, and a defective nozzle candidate estimation program 244. The test control program 240 is applied to the testing of the printed image to which the test apparatus 20 is applied.

The printed image determination program 242 is applied to determination as to whether the printed image is a good printed image or a defective printed image based on the test data acquired from the test apparatus 20 in the test data processing portion 132. The defective nozzle candidate estimation program 244 is applied to estimation processing of the defective nozzle candidate and output of the notification of the defective nozzle candidate information in the test data analysis portion 162 illustrated in Fig. 8.

The test program 234 according to the embodiment is an example of a first program.

Various programs stored in the computer-readable medium 204 include one or more instructions. The computer-readable medium 204 stores various types of data, various parameters, and the like. The memory 120 illustrated in Fig. 6 is included in the computer-readable medium 204 illustrated in Fig. 9.

The ink jet printing system 10 implements various functions of the ink jet printing system 10 by executing the various programs stored in the computer-readable medium 204 via the processor 202. The term program is synonymous with the term software.

The control apparatus 200 performs data communication with the external apparatus through the communication interface 206. Various standards such as universal serial bus (USB) may be applied to the communication interface 206. Any of wired communication and wireless communication may be applied to a communication form of the communication interface 206.

The input apparatus 214 and the display apparatus 216 are connected to the control apparatus 200 through the input-output interface 208. An input device such as a keyboard and a mouse is applied to the input apparatus 214. The display apparatus 216 displays various types of information applied to the control apparatus 200.

A liquid crystal display, an organic EL display, a projector, and the like may be applied as the display apparatus 216. Any combination of a plurality of devices may be applied as the display apparatus 216. For example, the display apparatus 216 of a touch panel method may be used as both of the input apparatus 214 and the display apparatus 216. EL in the organic EL display is the abbreviation for Electro-Luminescence.

Here, examples of a hardware structure of the processor 202 include a CPU, a GPU, a programmable logic device (PLD), and an application specific integrated circuit (ASIC). The CPU is a general-purpose processor that acts as various functional portions by executing a program. The GPU is a processor specialized for image processing.

The PLD is a processor of which a configuration of an electric circuit can be changed after the device is manufactured. Examples of the PLD include a field programmable gate array (FPGA). The ASIC is a processor comprising a dedicated electric circuit that is dedicatedly designed to execute specific processing.

One processing portion may be composed of one of the various processors or may be composed of two or more processors of the same type or different types. Examples of a combination of various processors include a combination of one or more FPGAs and one or more CPUs and a combination of one or more FPGAs and one or more GPUs. Other examples of the combination of various processors include a combination of one or more CPUs and one or more GPUs.

A plurality of functional portions may be configured using one processor. Examples of the plurality of functional portions configured using one processor include, as represented by a computer such as a client or a server, an aspect in which one processor is configured by applying a combination of one or more CPUs and software such as a system on a chip (SoC) and this processor acts as the plurality of functional portions.

Other examples of the plurality of functional portions configured using one processor include an aspect of using a processor that implements functions of the entire system including the plurality of functional potions using one IC chip. IC is the abbreviation for Integrated Circuit.

As described above, various functional portions are configured using one or more of the various processors as a hardware structure. Furthermore, the hardware structure of the various processors is more specifically an electric circuit (circuitry) in which circuit elements such as semiconductor elements are combined.

The computer-readable medium 204 may include a semiconductor element such as a read only memory (ROM) and a random access memory (RAM). The computer-readable medium 204 may include a magnetic storage medium such as a hard disk. The computer-readable medium 204 may be provided with a plurality of types of storage media.

The processor 202 according to the embodiment is an example of a first processor, a second processor, and a third processor. The computer-readable medium 204 according to the embodiment is an example of a first memory, a second memory, and a third memory.

### [Data Processing Method According to Embodiment]

### [Summary]

In the inkjet printing system 10 that performs single pass printing as described using Figs. 1 to 9, there is an issue of a defect having a streak shape caused by curved jetting and non-jetting in the defective nozzle occurring in the ink jet head 30. A case where the defect occurs at all times, and a case where the defect occurs under a specific printing condition such as a specific gradation are present for the defective nozzle.

The defective nozzle in which the defect occurs at all times can be specified using the test pattern image, and the occurrence of the defect having a streak shape may be suppressed by performing the jetting correction. Meanwhile, it is difficult to specify the defective nozzle in which the defect occurs under a specific printing condition using the test pattern image.

The defect having a streak shape caused by the defective nozzle in which the defect occurs under a specific printing condition can be detected using the test apparatus 20. While it is difficult to specify the defective nozzle that causes the defect having a streak shape, one or more defective nozzle candidates can be estimated.

The defect having a streak shape that cannot be specified using the test pattern image has variation in appearance frequency. For example, the defect may appear with relatively high frequency or may appear with relatively low frequency such as the defect that appears in one printed image among hundreds of printed images. In addition, intensity of the defect having a streak shape also varies. The defect having a streak shape that is relatively easily visible has relatively high intensity. Meanwhile, the defect having a streak shape that is relatively not easily visible has relatively low intensity.

Even in a case where the defect having a streak shape is detected in the printed image, it may not be required to perform the jetting correction and the maintenance of the inkjet head 30, and the user may be caused to determine whether or not to perform the jetting correction and the like.

A data processing method described below enables the ink jet printing system 10 to efficiently operate by notifying the user of the defective nozzle candidate estimated using the test data of the printed image and causing the user to determine processing with respect to the defective nozzle candidate.

For example, in a case where the defect having a streak shape of which streak intensity is relatively low has occurred in the printed image, the user may choose to continue the printing job without performing processing such as the maintenance of the ink jet head 30.

### [Procedure of Data Processing Method]

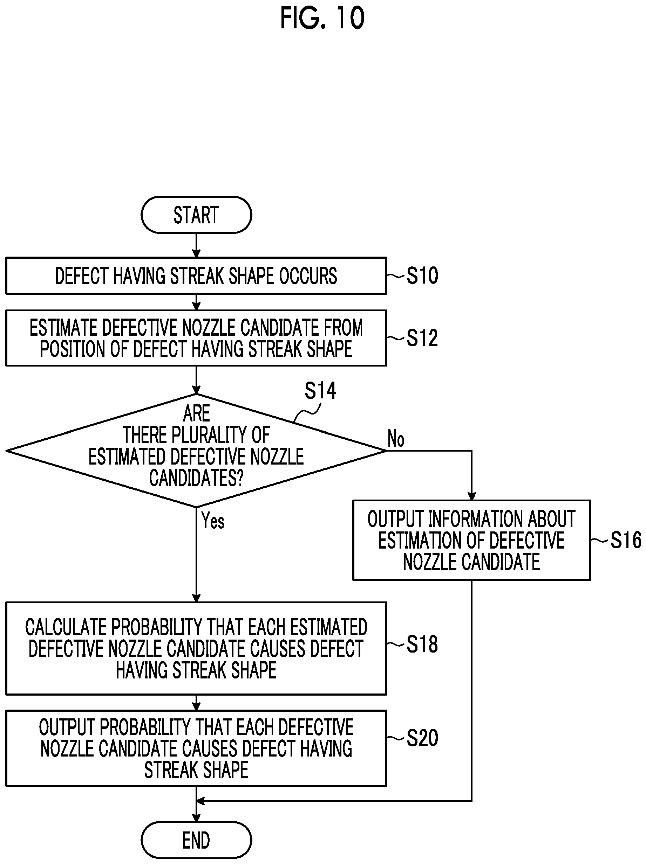

Fig. 10 is a flowchart illustrating a procedure of the data processing method according to the embodiment. In defect information acquisition step S10, the test data analysis portion 162 illustrated in Fig. 8 acquires defect information of the printed image from the test data of the printed image. A transition is made to defective nozzle candidate estimation step S12 after defect information acquisition step S10.

In defective nozzle candidate estimation step S12, the test data analysis portion 162 specifies the position of the defect from the defect information of the printed image acquired in defect information acquisition step S10 and estimates one or more defective nozzle candidates corresponding to the position of the defect. A transition is made to defective nozzle candidate count determination step S14 after defective nozzle candidate estimation step S12.

In defective nozzle candidate count determination step S14, the test data analysis portion 162 determines whether or not there are a plurality of defective nozzle candidates. In defective nozzle candidate count determination step S14, a No determination is made in a case where it is determined that there is one defective nozzle candidate. In a case where a No determination is made, a transition is made to defective nozzle candidate information output step S16.

In defective nozzle candidate information output step S16, the defective nozzle candidate information output portion 168 outputs the position and the color of the defective nozzle candidate estimated in defective nozzle candidate estimation step S12 as the defective nozzle candidate information. The defective nozzle candidate information is displayed on the display apparatus 216 illustrated in Fig. 9. After defective nozzle candidate information output step S16, the procedure of the data processing method is finished.

Meanwhile, in defective nozzle candidate count determination step S14, a Yes determination is made in a case where it is determined that there are a plurality of defective nozzle candidates. In a case where a Yes determination is made, a transition is made to probability calculation step S18.

In probability calculation step S18, the test data analysis portion 162 calculates a probability of causing the defect having a streak shape for each of the plurality of defective nozzle candidates. The probability of causing the defect having a streak shape means a probability that the defective nozzle candidate actually causes the occurrence of the defect having a streak shape. After probability calculation step S18, a transition is made to defective nozzle probability information output step S20.

In defective nozzle probability information output step S20, the defective nozzle candidate information output portion 168 outputs a probability that the defective nozzle candidate is the defective nozzle for each of the plurality of defective nozzle candidates. The defective nozzle candidate information is displayed on the display apparatus 216 illustrated in Fig. 9. After defective nozzle probability information output step S20, the procedure of the data processing method is finished.

The user of the ink jet printing system 10 may perceive the probability that the defective nozzle candidate causes the defect having a streak shape for each of the plurality of defective nozzle candidates, and determine a priority for executing the recovery processing and the like of the inkjet head 30.

### [Notification of Defective Nozzle Candidate Information]

The position of the defective nozzle candidate may be applied as the defective nozzle candidate information provided by notification. For example, the nozzle number for each ink jet head 30 may be applied. In a case where the plurality of head modules 38 are comprised, the module numbers assigned to the head modules 38 may be applied as the defective nozzle candidate information provided by notification.

In a case where the inkjet head 30 is comprised for each ink color, information about a color of the ink jet head 30 may be applied as the defective nozzle candidate information provided by notification. The defective nozzle candidate information provided by notification may be a combination of the color of the ink jet head 30 and the nozzle number or the module number.

The defective nozzle candidate information provided by notification may be information in maintenance units. For example, in a case where the recovery processing of recovering the defective nozzle is the maintenance of the inkjet head 30, the inkjet head 30 including the defective nozzle candidate may be applied as the defective nozzle candidate information provided by notification.

The defective nozzle candidate information may include information about the occurrence frequency indicating a degree to which the defect occurs for the defective nozzle candidate. For example, in a case where defective nozzle candidates that are only a few increase to a few tens of defective nozzle candidates in one printing job and the notification of the occurrence frequency of the defective nozzle is provided, the user may determine whether or not to perform processing of correcting the defect having a streak shape.

In addition, in a case where the defect occurrence frequency of the defective nozzle of which jetting performance is recovered by performing the recovery processing of the ink jet head 30 is increased, the user may determine to replace the head module 38.

### [Performance Recovery Processing of Defective Nozzle]

By presenting the defective nozzle candidate to the user, the user may determine to perform the maintenance of the ink jet head 30, replace the head module 38, and the like. In addition, the ink jet printing system 10 preferably performs performance recovery processing of recovering the performance of the defective nozzle.

Examples of the performance recovery processing of recovering the performance of the defective nozzle include the jetting correction performed by masking the defective nozzle as the unused nozzle and changing a jetting condition for the normal nozzle positioned adjacent to the defective nozzle. The user may set the unused nozzle from the defective nozzle candidates provided by notification and perform the jetting correction of suppressing the occurrence of the defect having a streak shape. The unused nozzle according to the embodiment is an example of an unused printing element.

Examples of the performance recovery processing of recovering the performance of the defective nozzle include the maintenance of the ink jet head 30. In a case where the notification of the defective nozzle candidate is provided, the user may instruct the ink jet printing system 10 to perform the maintenance of the ink jet head 30.

### [Effects of Embodiment]

According to the inkjet printing system 10 and the data processing method according to the embodiment, the following effects can be obtained.
[1] In a case where a defect in the printed image is detected, one or more defective nozzle candidates that may actually cause the occurrence of the defect are estimated, the notification of the estimated defective nozzle candidate is provided, and the notification of the probability of actually causing the occurrence of the defect in the printed image is provided for each defective nozzle candidate. Accordingly, the user may determine whether or not to perform the processing of correcting the defect in the printed image.
[2] The probability of actually causing the occurrence of the defect in the printed image for each defective nozzle candidate is derived by calculating the peak position of the defect at the position of the defect in the printed image. Accordingly, the probability of actually causing the occurrence of the defect in the printed image may be set to be relatively high for the nozzle positioned relatively close to the peak position of the defect, and the probability of actually causing the occurrence of the defect in the printed image may be set to be relatively low for the nozzle positioned relatively far from the peak position of the defect.
[3] The probability of actually causing the occurrence of the defect in the printed image for each defective nozzle candidate may be derived using the trained learning model. Accordingly, the probability of actually causing the occurrence of the defect in the printed image for each defective nozzle candidate may be derived with high accuracy.
[4] Information indicating the position of the nozzle in the inkjet head 30 is applied as the defective nozzle candidate provided by notification. Accordingly, the position of the nozzle as the defective nozzle candidate in the inkjet head 30 may be specified.
[5] The nozzle numbers assigned to all nozzles provided in the inkjet head 30 are applied as the information indicating the position of the nozzle in the inkjet head 30. Accordingly, the defective nozzle candidate may be specified using the nozzle numbers.
[6] The notification of the color of the defective nozzle candidate provided by notification is provided. Accordingly, the inkjet head 30 corresponding to the color for which the defective nozzle candidate is present may be specified.
[7] The notification of the defect occurrence frequency in the defective nozzle candidate is provided. Accordingly, the user may determine whether or not to perform the processing of correcting the defect in the printed image in accordance with the defect occurrence frequency in the defective nozzle candidate.
[8] The notification of the defect occurrence count in the defective nozzle candidate is provided. Accordingly, the user may determine whether or not to perform the processing of correcting the defect in the printed image in accordance with the defect occurrence count in the defective nozzle candidate.
[9] The jetting correction is performed as the processing of correcting the defect in the printed image. Accordingly, the processing of correcting the defect in the printed image may be performed in printing.
[10] The maintenance of the inkjet head 30 is performed as the processing of correcting the defect in the printed image. Accordingly, the occurrence of the defect in the printed image may be suppressed by performing the maintenance of the inkjet head 30.
[11] The inkjet head 30 is replaced as the processing of correcting the defect in the printed image. Accordingly, the occurrence of the defect in the printed image may be suppressed by replacing the ink jet head 30. The head module 38 may be replaced in the ink jet head 30 comprising the plurality of head modules 38.

### [Application to Data Processing Apparatus and Test Apparatus]

The test data processing portion 132 illustrated in Figs. 6 and 7 may be formed as a data processing apparatus that acquires the test data from the test apparatus 20 and that processes the acquired test data, using a computer. A test apparatus comprising the test apparatus 20 and the test data processing portion 132 may also be configured.

### [Application to Printing System of Other than Ink Jet Method]

While the ink jet printing system 10 to which an ink jet method is applied is illustrated in the present embodiment, data processing according to the present embodiment may also be performed for a printing system of, for example, an electrophotographic method other than the inkjet method.

In a case where the electrophotographic method is used, the nozzle in the ink jet method corresponds to an exposure element. In addition, in a case where the electrophotographic method is used, the ink color is replaced with a color of a coloring material such as toner. Furthermore, in a case where the electrophotographic method is used, the maintenance of the inkjet head 30 is replaced with cleaning of a printing head.

### [Terms]

The term printing apparatus is synonymous with terms such as a printing machine, a printer, a typing apparatus, an image recording apparatus, an image forming apparatus, an image output apparatus, and a drawing apparatus. An image is interpreted in a broad sense and also includes a color image, a monochrome image, a single color image, a gradation image, a uniform density image, and the like.

The term printing includes concepts of terms such as recording of an image, forming of an image, typing, drawing, and making a print. The term apparatus may include a concept of a system.

An image is not limited to a photographic image and is used as a comprehensive term including a design, a test, a symbol, a line drawing, a mosaic pattern, a color-coding pattern, other various patterns, and the like, and an appropriate combination thereof. In addition, the term image may include meanings of an image signal and image data indicating an image.

Configuration requirements of the embodiment of the present invention described above can be changed, added, or deleted, as appropriate, without departing from the gist of the present invention. The present invention is not limited to the embodiment described above, and many modifications can be made by those having ordinary knowledge in the field within the technical idea of the present invention. In addition, the embodiment, modification examples, and application examples may be combined, as appropriate.

### Explanation of References

1: film substrate
1A: printing surface
1B: substrate support surface
10: inkjet printing system
12: substrate supply apparatus
14: precoating apparatus
16: jetting apparatus
18: drying apparatus
20: test apparatus
22: collecting apparatus
24: transport apparatus
30: inkjet head
30C: inkjet head
30K: inkjet head
30M: inkjet head
30Y: inkjet head
31: flexible substrate
32: scanner
34: pass roller
36: tension pickup
37: nozzle surface
38: head module
38C: nozzle disposition portion
39: head frame
39A: dummy plate
40: nozzle
42: nozzle opening
50: scanner unit
52: illumination unit
54: transport roller
56: transport roller
58: image sensor
60: image forming lens
70: maintenance apparatus
72: head moving apparatus
74: wiping apparatus
76: capping apparatus
80: carriage
82: guide
86: discharge flow channel
88: discharge pump
90: discharge tank
100: system control portion
102: transport control portion
104: precoating control portion
106: jetting control portion
108: drying control portion
110: maintenance control portion
112: scanner control portion
114: test control portion
120: memory
122: sensor
130: read data processing portion
132: test data processing portion
134: nozzle information notification portion
136: user input information acquisition portion
150: read data acquisition portion
152: read data analysis portion
154: defective nozzle information storage portion
156: defective nozzle information output portion
160: test data acquisition portion
162: test data analysis portion
164: defective nozzle probability calculation portion
166: defective nozzle candidate information storage portion
168: defective nozzle candidate information output portion
170: reference data acquisition portion
172: data comparing portion
174: defect position specifying portion
176: nozzle mapping information acquisition portion
178: defective nozzle candidate estimation portion
200: control apparatus
202: processor
204: computer-readable medium
206: communication interface
208: input-output interface
210: bus
214: input apparatus
216: display apparatus
220: transport control program
222: precoating control program
224: jetting control program
226: drying control program
228: maintenance control program
230: scanner control program
232: test pattern image analysis program
234: test program
240: test control program
242: printed image determination program
244: defective nozzle candidate estimation program
S10 to S20: each step of data processing method

## Claims

1. A data processing apparatus comprising:
one or more processors; and
one or more memories in which a program executed by the one or more processors is stored,
wherein the one or more processors are configured to:
by executing an instruction of the program,
acquire captured data generated by capturing a printed image printed on a printing medium;
specify a defect position indicating a position of a defect in the printed image by analyzing the captured data;
estimate one or more defective printing element candidates as candidates of a defective printing element from a plurality of printing elements provided in a printing head, from the defect position in the printed image;
derive a probability that the defective printing element candidate actually causes occurrence of the defect; and
provide notification of defective printing element candidate information including the probability of actually causing the occurrence of the defect for each defective printing element candidate.

2. The data processing apparatus according to claim 1,
wherein the one or more processors are configured to:
derive a peak position in a profile of the defect from the captured data; and
derive the probability that the defective printing element candidate actually causes the occurrence of the defect, based on the peak position.

3. The data processing apparatus according to claim 1,
wherein the one or more processors are configured to derive the probability that the defective printing element candidate actually causes the occurrence of the defect, by applying a trained learning model.

4. The data processing apparatus according to any one of claims 1 to 3,
wherein the one or more processors are configured to provide notification of a position of the defective printing element candidate in the printing head.

5. The data processing apparatus according to any one of claims 1 to 4,
wherein the one or more processors are configured to provide notification of a printing element number assigned to the printing elements provided in the printing head for the defective printing element candidate.

6. The data processing apparatus according to any one of claims 1 to 5,
wherein the one or more processors are configured to provide notification of a color printed by the defective printing element candidate.

7. The data processing apparatus according to any one of claims 1 to 6,
wherein the one or more processors are configured to provide notification of an occurrence frequency of the defective printing element candidate.

8. The data processing apparatus according to any one of claims 1 to 7,
wherein the one or more processors are configured to provide notification of an occurrence count of the defective printing element candidate.

9. A data processing method comprising:
via a computer,
acquiring captured data generated by capturing a printed image printed on a printing medium;
specifying a defect position indicating a position of a defect in the printed image by analyzing the captured data;
estimating one or more defective printing element candidates as candidates of a defective printing element from a plurality of printing elements provided in a printing head, from the defect position in the printed image;
deriving a probability that the defective printing element candidate actually causes occurrence of the defect; and
providing notification of defective printing element candidate information including the probability of actually causing the occurrence of the defect for each defective printing element candidate.

10. A program causing a computer to implement:
a function of acquiring captured data generated by capturing a printed image printed on a printing medium;
a function of specifying a defect position indicating a position of a defect in the printed image by analyzing the captured data;
a function of estimating one or more defective printing element candidates as candidates of a defective printing element from a plurality of printing elements provided in a printing head, from the defect position in the printed image;
a function of deriving a probability that the defective printing element candidate actually causes occurrence of the defect; and
a function of providing notification of defective printing element candidate information including the probability of actually causing the occurrence of the defect for each defective printing element candidate.

11. A non-transitory computer-readable recording medium on which the program according to claim 10 is recorded.

12. A test apparatus comprising:
an imaging apparatus that captures a printed image printed on a printing medium;
one or more processors; and
one or more memories in which a program executed by the one or more processors is stored,
wherein the one or more processors are configured to:
by executing an instruction of the program,
acquire captured data generated using the imaging apparatus;
specify a defect position indicating a position of a defect in the printed image by analyzing the captured data;
estimate one or more defective printing element candidates as candidates of a defective printing element from a plurality of printing elements provided in a printing head, from the defect position in the printed image;
derive a probability that the defective printing element candidate actually causes occurrence of the defect; and
provide notification of defective printing element candidate information including the probability of actually causing the occurrence of the defect for each defective printing element candidate.

13. A printing system comprising:
one or more printing heads;
a moving apparatus that relatively moves the printing head and a printing medium;
an imaging apparatus that captures a printed image printed on the printing medium using the printing head;
a data processing apparatus that processes captured data generated using the imaging apparatus;
one or more first processors; and
one or more first memories in which a first program executed by the one or more first processors is stored,
wherein the one or more first processors are configured to:
by executing an instruction of the first program,
acquire captured data generated by capturing the printed image printed on the printing medium;
specify a defect position indicating a position of a defect in the printed image by analyzing the captured data;
estimate one or more defective printing element candidates as candidates of a defective printing element from a plurality of printing elements provided in the printing head, from the defect position in the printed image;
derive a probability that the defective printing element candidate actually causes occurrence of the defect; and
provide notification of defective printing element candidate information including the probability of actually causing the occurrence of the defect for each defective printing element candidate.

14. The printing system according to claim 13, further comprising:
a recovery processing apparatus that performs recovery processing on the printing head.

15. The printing system according to claim 14, further comprising:
one or more second processors; and
one or more second memories in which a second program executed by the one or more second processors is stored,
wherein the one or more second processors are configured to, by executing an instruction of the second program, perform the recovery processing of the defective printing element candidate using the recovery processing apparatus.

16. The printing system according to any one of claims 13 to 15,
wherein the one or more first processors are configured to provide notification indicating that replacement of the printing head provided with the defective printing element candidate is required.

17. The printing system according to any one of claims 13 to 16, further comprising:
one or more third processors; and
one or more third memories in which a third program executed by the one or more third processors is stored,
wherein the one or more third processors are configured to:
by executing an instruction of the third program,
perform masking processing of masking the defective printing element candidate as an unused printing element; and
perform printing at a printing position at which the unused printing element performs printing, using a normal printing element.

18. The printing system according to claim 17,
wherein the one or more third processors are configured to:
acquire information about a defective printing element stored in advance;
perform masking processing of masking the defective printing element as the unused printing element; and
perform printing at the printing position at which the unused printing element performs printing, using the normal printing element.
